# EUROPÄISCHE PATENTSCHRIFT

(11) **EP 1 373 947 B1**
(45) Veröffentlichungstag und Bekanntmachung des Hinweises auf die Patenterteilung: **14.12.2005**
(21) Anmeldenummer: 02724103.3
(22) Anmeldetag: 14.03.2002
(51) Int. Cl.: G02B 5/30

(54) **FARBIGE DICHROITISCHE POLARISATOREN UND VERFAHREN ZU IHRER HERSTELLUNG**
COLOR DICHROIC POLARIZERS AND METHOD FOR THE PRODUCTION THEREOF
DISPOSITIFS DE POLARISATION DICHROIQUES COLORES ET LEUR PROCEDE DE REALISATION

(30) Priorität: 26.03.2001 DE 10114815
(43) Veröffentlichungstag der Anmeldung: 02.01.2004
(73) Patentinhaber: Berger, Andreas, 06114 Halle (DE); Drost, Wolf-Gernot, 06124 Halle (DE)
(72) Erfinder: PANZER, Siegfried, 01279 Dresden (DE); BARTEL, Rainer, 01324 Dresden (DE); DÄNHARDT, Jürgen, 01189 Dresden (DE); BERGER, Andreas, 06114 Halle (DE); DROST, Wolf-Gernot, 06124 Halle (DE); GAUDIG, Lutz, 06132 Halle (DE)
(74) Vertreter: Voigt, Wolf-Rüdiger
(86) Internationale Anmeldenummer: PCT/DE2002/000913
(87) Internationale Veröffentlichungsnummer: WO 2002/077679

(56) Entgegenhaltungen:
- EP-A- 0 521 591
- DE-A- 19 642 116
- DE-A- 19 829 970
- HOFMEISTER H ET AL: "Oriented prolate silver particles in glass-characteristics of novel dichroic polarizers" NANOSTRUCTURED MATERIALS, ELSEVIER, NEW YORK, NY, US, Bd. 12, Nr. 1-4, 1999, Seiten 207-210, XP004176974 ISSN: 0965-9773
- PATENT ABSTRACTS OF JAPAN vol. 1999, no. 12, 29. Oktober 1999 (1999-10-29) -& JP 11 183727 A (TDK CORP), 9. Juli 1999 (1999-07-09) -& US 6 251 297 B1 (TDK CORP) 26. Juni 2001 (2001-06-26)

## Beschreibung

Die Erfindung betrifft farbige, vorzugsweise mehrfarbige, dichroitische Polarisatoren und ein Verfahren zu ihrer Herstellung. Bei dieser Art von Polarisatoren wird die Farb- und Polarisationswirkung durch die dichroitische Absorption nichtsphärischer Partikel, vorrangig metallischer Partikel, die in Glas als Trägermaterial eingebettet sind, realisiert. Die Erfindung bezieht sich auf die Formen der Partikel im Trägermaterial und damit die Form und spektrale Lage der Absorptionsbanden sowie ein Verfahren zur Einstellung derselben.

Das Anwendungsgebiet der Erfindung sind Polarisatoren im sichtbaren, ultravioletten und nahen infraroten Spektralbereich mit vorzugsweise lateral unterschiedlich gezielt eingestellten dichroitischen Absorptionsbanden. Derartige Polarisatoren sind u. a. zur Herstellung von Displays geeignet.

Es ist bekannt, dass einheitlich orientierte nichtsphärische Partikel in Trägermaterialien zu dichroitischen Absorptionsbanden führen können. Typische Beispiele sind Silber-, Kupfer- oder Goldpartikel in Gläsern. Ausgerichtete rotationsellipsoidförmige metallische Silberpartikel führen z. B. in Gläsern zu dichroitischen Absorptionsbanden im sichtbaren, ultravioletten und nahen infraroten Spektralbereich. Im sichtbaren Spektralbereich bewirkt die dichroitische Absorption eine polarisationsrichtungsabhängige Farbwirkung. Für den Fall von Silberpartikeln ist dabei charakteristisch, dass das dichroitische Verhalten durch eine Einfach-Absorptionsbande hervorgerufen wird. Die Absorptionsbande im sichtbaren Spektralbereich lässt sich prinzipiell an unterschiedliche Stellen des sichtbaren Spektrums legen, wodurch verschiedene Farbwirkungen einstellbar sind. Die Lage des Maximums der Absorptionsbande im Spektrum wird dabei im wesentlichen durch die Form der Partikel bestimmt. Im Falle ellipsoidförmiger Partikel ist die spektrale Lage der Absorptionsbande durch das Halbachsenverhältnis der Partikel bestimmt.

Es gibt zahlreiche Vorschläge, die diesen Effekt für spezielle Applikationen nutzen.

Aus DE 29 27 230 C2 "Verfahren zur Herstellung einer polarisierten Glasfolie, danach hergestellte Glasfolie und Verwendung einer solchen Folie in Flüssigkeitskristallanzeigen" ist ein Verfahren zur Herstellung eines dichroitischen Polarisators für Flüssigkristallanzeigen bekannt. Ausgangspunkt ist eine organische oder anorganische Glasschmelze, in welche nadelförmige Körper eingebracht werden und aus der eine Glasfolie gezogen wird.

Es ist bekannt, hochpolarisierende Gläser auf der Basis phasenseparierter silberhalogenidhaltiger Gläser herzustellen, in denen durch Temperung Silberhalogenidpartikel der gewünschten Größe erzeugt werden (US 3,653,863). Anschließend folgen zwei weitere Schritte: Zuerst wird das Glas bei Temperaturen zwischen oberem Kühlpunkt und Glasübergangstemperatur verstreckt, extrudiert oder gewalzt, um den Silberhalogenidpartikeln eine ellipsoidförmige Gestalt zu geben und um sie gleichgerichtet zu orientieren. Anschließend wird das Glas einer Strahlung, z. B. UV-Strahlung, ausgesetzt. Dabei scheidet sich metallisches Silber auf der Oberfläche der Silberhalogenidpartikel ab. Diese Gläser können durch Bestrahlung zwischen klar unpolarisiert und eingedunkelt-polarisierend eingestellt werden.

Es ist weiterhin bekannt, Glas unterhalb des Kühlpunktes in einer reduzierenden Atmosphäre zu tempern, um langgestreckte Silberpartikel in einer Oberflächenschicht des Glases von mindestens 10 µm Dicke zu erzeugen (US 4,304,584). Die Erzeugung eines zu einem Verbund zusammengesetzten Glases, wobei polarisierende und photochrome Glasschichten kombiniert und laminiert werden, ist dort beschrieben.

Es ist bekannt, ein metallhalogenidhaltiges Glas mit einem anderen Glas vor dem Deformationsprozess zu laminieren, um höhere Exzentrizitäten der Metallpartikel zu erzielen (US 4,486,213).

Es ist bekannt, UV-Polarisatoren dadurch herzustellen, dass die Bildung von Metallpartikeln in einer Oberflächenschicht von Gläsern durch einen mehrfachen Wechsel von Einbringen von Metallionen und Tempern erfolgt (DE 198 29 970). Dadurch entstehen kugelförmige Partikel mit einer gewissen Größenverteilung. Bei anschließender Deformation des Glases entstehen rotationsellipsoidförmige Partikel verschiedener Größe mit verschiedenen Halbachsenverhältnissen.

Gemeinsam ist diesen Verfahren, dass in einer Substratmatrix submikroskopische, in der Regel kugelförmige Fremdphasen-Partikel erzeugt werden, die anschließend in einem Deformationsprozess verformt und einheitlich in einer Vorzugsrichtung ausgerichtet werden. Die resultierenden dichroitischen Absorptionsbanden der verformten Fremdphasen-Partikel werden im Wesentlichen durch deren Form bestimmt und sind damit festgelegt.

Es ist weiterhin bekannt, dass bei Erwärmung der Substrate auf Temperaturen nahe bei oder über die Transformationstemperatur des Glases eine Relaxation der Partikel zurück bis zur Kugelgestalt auftritt. Verbunden damit ist eine Veränderung der dichroitischen Absorption. Je nach Temperatur und Zeitdauer ihrer Einwirkung können Partikel mit beliebigem Relaxationsgrad zwischen Ausgangszustand und Kugelform erzeugt werden. Der üblicherweise im Stundenbereich liegende Temperprozess gestattet jedoch nur die einfarbige Einstellung dichroitischer Polarisationsgläser auf bestimmte Farben.

Es ist bekannt, durch Anwendung von Temperaturen, die wesentlich über dem Transformationspunkt des Glases liegen, die Relaxationszeiten für den Übergang der Metallpartikel von einem Halbachsenverhältnis in ein geringeres bis in den Mikrosekundenbereich zu verkürzen (DE 196 42 116). Die Energieübertragung erfolgt strukturiert mit Elektronenstrahlen. Das Verfahren erlaubt zudem, in unterschiedlichen Lateralbereichen des Substrats die Absorptionsbande und damit die Farbwirkung gezielt unterschiedlich einzustellen. Auf diese Weise können auch Flächenelemente unterschiedlicher Farben mit lateralen Abmessungen bis weit unterhalb 100 µm erzeugt werden.

Prinzipieller Mangel des Standes der Technik ist, dass die realisierbaren Absorptionsbanden, im Falle von Silber eine Einfachbande, stets auf die Bandenform, die durch die Form der Partikel bestimmt ist, festgelegt ist. Komplexere Bandenformen sind nicht realisierbar.

Will man jedoch eine Vollfarbigkeit durch additive Farbmischung der Grundfarben Rot, Grün und Blau realisieren, so sind spezielle Anforderungen an die Absorptionsspektren zu stellen, die nach dem Stand der Technik nicht umsetzbar sind. Um bei Beleuchtung mit Tageslicht eine der drei Grundfarben zu erhalten, müssen jeweils die beiden anderen Grundfarben stark absorbiert werden. Um beispielsweise bei Beleuchtung mit Tageslicht die Farben Rot bzw. Blau zu erhalten, sind breite Absorptionsbanden erforderlich, die jeweils im blauen und grünen bzw. roten und grünen Spektralbereich absorbieren. Um Grün zu erhalten, sind zwei Absorptionsbanden mit Maxima im roten und blauen Spektralbereich notwendig. Nach dem Stand der Technik liegt dies außerhalb der gebotenen Möglichkeiten.
Für eine Anwendung der dichroitischen Polarisatoren für Farbdisplays wäre es jedoch erforderlich, kleine Bereiche mit derartigen Absorptionsbanden dicht nebeneinander anzuordnen, um beim Betrachter eine additive Mischung der Grundfarben physiologisch wirksam werden zu lassen.

Der Erfindung liegt die Aufgabe zugrunde, einen mehrfarbigen dichroitischen Polarisator zu schaffen, der in lateraler Anordnung dicht nebeneinander liegende Flächenbereiche, wie z.B. Streifen oder Pixel enthält, die sich in der spektralen Lage ihrer Absorptionsbanden unterscheiden und vorzugsweise in den Farben Rot, Grün und Blau eingestellt sind. Weiterhin besteht die Aufgabe, ein Verfahren anzugeben, das es gestattet, die dazu erforderlichen Absorptionsbanden in dichroitischem Polarisationsglas zu realisieren. Vor allem im Hinblick auf die Erzeugung der dichroitischen Farbe Grün sollen zwei Absorptionsbanden mit ihren Maxima im roten und blauen Spektralbereich liegen, um im Glas die Farbe Grün zu erzeugen.

Es wird davon ausgegangen, dass es möglich ist, durch Überlagerung unterschiedlicher Absorptionsbanden nahezu beliebige Absorptionsspektren zu realisieren. Die Überlagerung der Absorptionsbanden kann dadurch erreicht werden, dass Teilschichten mit Absorptionsbanden in unterschiedlichen Spektralbereichen hintereinander angeordnet werden. Für die Realisierung beliebiger Absorptionsspektren auf sehr kleinen Flächen, also beispielsweise Pixelstrukturen, ist Parallaxefreiheit erforderlich. Dafür ist eine möglichst dichte Anordnung der hintereinanderliegenden Teilschichten notwendig.

Erfindungsgemäß wird diese dichte Anordnung dadurch ermöglicht, dass die absorbierende Schicht mindestens als Doppelschicht ausgebildet ist, deren zwei Teilschichten unterschiedliche Absorptionsbanden aufweisen. Der auf diesem Prinzip aufgebaute farbige dichroitische Polarisator besteht vorzugsweise aus einem bekannten Natriumsilikatglassubstrat, das zumindest teilweise mit einer Doppelschicht versehen ist, die nichtsphärische Metallpartikel, insbesondere Silberpartikel, enthält. Deren mittleres Achsverhältnis innerhalb einer der beiden Teilschichten der Doppelschicht unterscheidet sich vom mittleren Achsverhältnis innerhalb der jeweils anderen der beiden Teilschichten der Doppelschicht. Die beiden Teilschichten sind somit durch unterschiedliche Absorptionsspektren, im Falle von Silberpartikeln durch unterschiedliche Einfachbanden, gekennzeichnet. Das resultierende Absorptionsspektrum ergibt sich somit aus der Überlagerung der Absorptionsbanden unterschiedlicher spektraler Lage der beiden hintereinanderliegenden Teilschichten der Doppelschicht. Auf diese Weise können Farben dargestellt werden, die sich nur durch mehrbandige Absorptionsspektren realisieren lassen. Werden kleine nebeneinander liegende Bereiche so behandelt, dass sich in ihnen unterschiedliche, vorzugsweise mehrbandige, Absorptionsspektren ausbilden, können die aus den unterschiedlichen Absorptionsspektren resultierenden Farben additiv gemischt werden.
In einer Ausführung als mehrfarbiger dichroitischer Polarisator werden auf diese Weise in verschiedenen lateralen Bereichen der Doppelschicht vorzugsweise drei unterschiedliche resultierende Absorptionsspektren dadurch erzielt, dass jeweils zwei Einfachbanden durch geeignete Einstellung der Absorption von lateralen Bereichen der Teilschichten der Doppelschicht miteinander kombiniert bzw, überlagert werden. Diese lateralen Bereiche werden in einer regelmäßigen Anordnung von Streifen oder Pixeln gruppiert. Jeweils drei dieser lateralen Bereiche, die durch geeignete Einstellung der Absorptionsbanden der Teilschichten der Doppelschicht bei Beleuchtung mit weißem Licht in den Farben Rot, Grün und Blau erscheinen, werden zu einem Flächenelement zusammengefasst, welches durch additive Farbmischung jede so darstellbare Farbe annehmen kann. Während in den roten und blauen Streifen oder Pixeln die Achsverhältnisse der Metallpartikel in den beiden Teilschichten der Doppelschicht so eingestellt sind, dass sie im blauen und grünen bzw. im roten und grünen Bereich liegende benachbarte Absorptionsbanden aufweisen, ist in den grünen Bereichen das Achsverhältnis der Metallpartikel in den beiden Teilschichten der Doppelschicht jeweils so eingestellt, dass sie im blauen bzw. im roten Spektralbereich absorbieren. Damit wird in diesen Lateralbereichen ein Absorptionspektrum mit zwei getrennten Maxima im roten und blauen Spektralbereich gebildet, so dass nur die grüne Komponente des Lichtes diese Lateralbereiche des Substrats passieren kann. Erst die Realisierung solcher Absorptionsspektren mit weit auseinander liegenden Absorptionsmaxima und einer ausreichenden optischen Dichte ermöglicht die Bereitstellung aller drei additiven Grundfarben und ist Voraussetzung für die volle Farbfähigkeit des erfindungsgemäßen dichroitischen Polarisators. Insbesondere bei einer optischen Dichte der einzelnen Teilschichten von ≥1 im Bereich der jeweiligen Absorptionsmaxima lassen sich Mischfarben hoher Sättigung realisieren.
Das Verfahren zur Herstellung der dichroitischen Polarisatoren beginnt in bekannter Weise zunächst mit der Erzeugung einer Oberflächenschicht in Glassubstraten, vorzugsweise Natrium-Silikatglassubstraten, die nichtsphärische Metallpartikel, vorzugsweise Silberpartikel, mit hinreichend großem Achsverhältnis in der erforderlichen Dichte und gerichteter Anordnung enthält. Die dazu erforderlichen Hauptprozessschritte sind entsprechend dem Stand der Technik Ionenaustausch, Tempern und Deformation. Die Einstellung lateraler Oberflächenbereiche auf bestimmte Absorptionsbanden erfolgt in bekannter Weise durch quasi-adiabatische Erwärmung des jeweiligen Oberflächenbereiches über zumindest die Dicke der die Metallpartikel enthaltenden Oberflächenschicht durch geeignete Elektronenstrahleinwirkung auf das Substrat.
Zur Einstellung unterschiedlicher Achsverhältnisse der Metallpartikel in den Oberflächenbereichen, die als Doppelschicht auszubilden sind, werden erfindungsgemäß die entsprechenden Oberflächenbereiche der kurzzeitigen Einwirkung eines Elektronenstrahls ausgesetzt, wobei die Elektronenreichweite im Substratmaterial vorzugsweise durch eine angepasste Beschleunigungsspannung des Elektronenstrahls derart gewählt wird, dass die zur gewünschten Relaxation der Metallpartikel benötigte Temperatur nur in der oberen Teilschicht der Doppelschicht erreicht wird, während in der unteren Teilschicht der Doppelschicht die Metallpartikel im Wesentlichen in ihrer Ausgangsgestalt verbleiben. Zweckmäßigerweise wird die Relaxation der Metallpartikel direkt in der an die Oberfläche grenzenden Teilschicht ermöglicht. Als besonders günstig hat es sich erwiesen, die Beschleunigungsspannung des Elektronenstrahles so zu wählen, dass die Elektronenreichweite im Substratmaterial zwischen dem zwei- und dreifachen Wert der Dicke der zu erzeugenden oberen Teilschicht der Doppelschicht beträgt.

Anhand eines Ausführungsbeispiels und der Zeichnungen wird die Erfindung näher erläutert. Es zeigt:
- Fig. 1: einen Ausschnitt aus einem erfindungsgemäßen mehrfarbigen dichroitischen Polarisator mit streifenförmigen Bildelementen in perspektivischer, stark vergrößerter Schnittdarstellung,

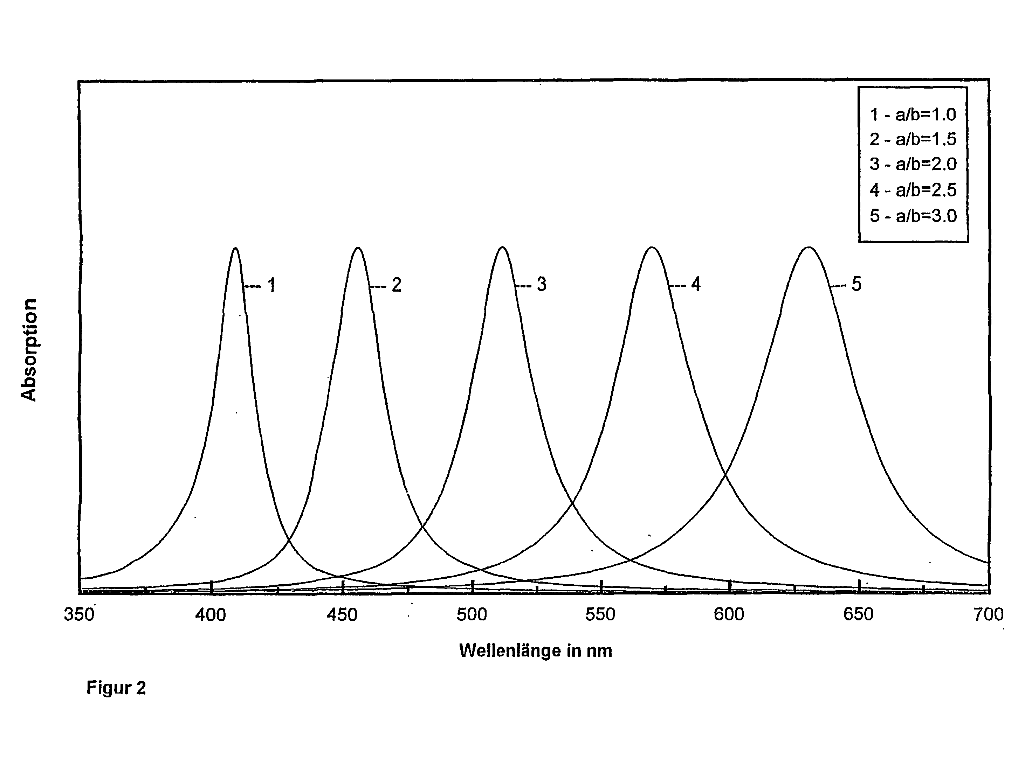

- Fig. 2: eine Veranschaulichung des Zusammenhangs zwischen dem Achsverhältnis der Silberpartikel und der spektralen Lage der zugeordneten Absorptionsbanden,

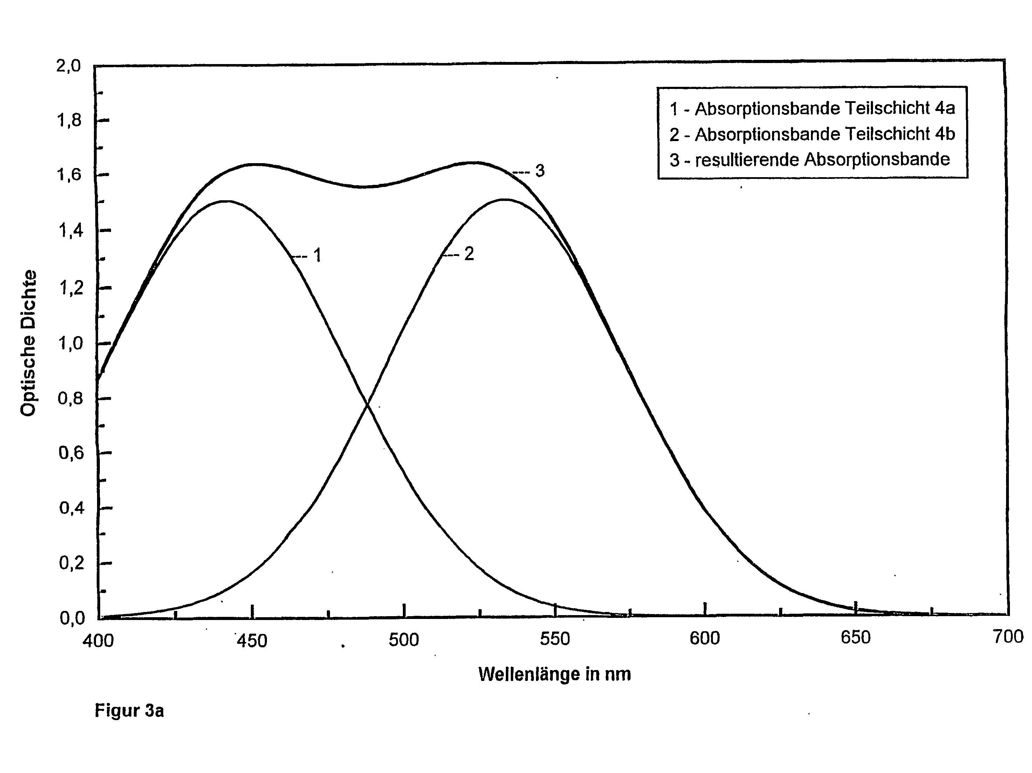

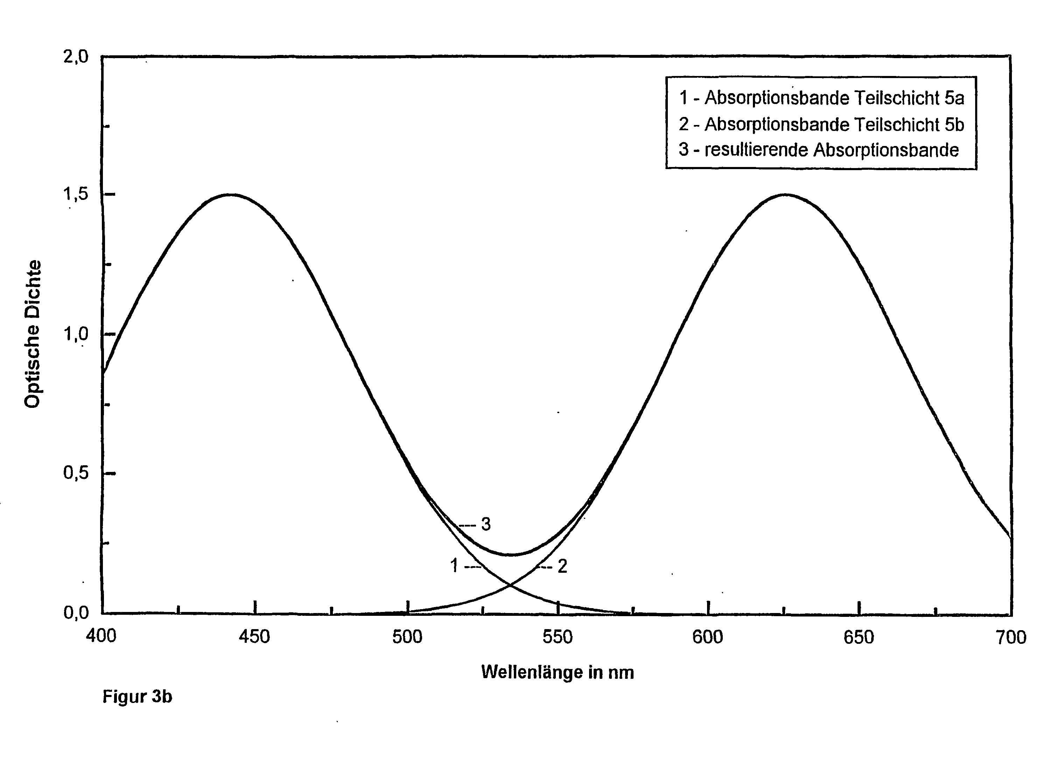

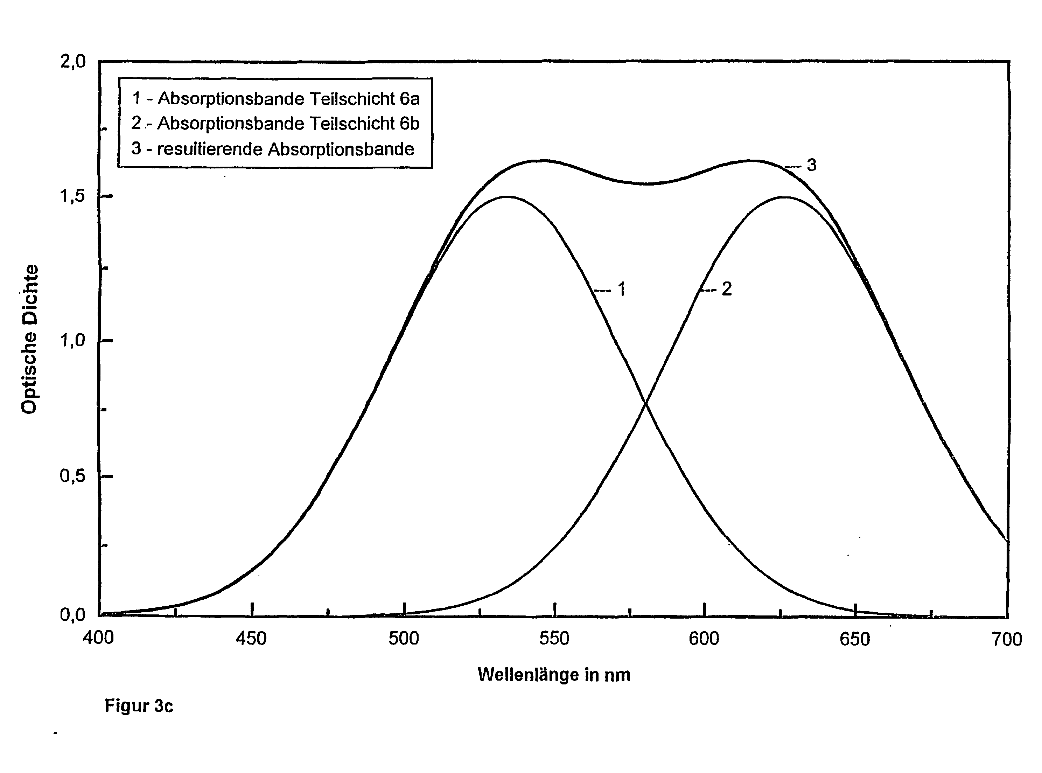

- Fig. 3: die in den Doppelschichten verschiedener lateraler Bereiche eines mehrfarbigen dichroitischen Polarisators eingestellten Absorptionsspektren zur Darstellung der Farben rot (Fig. 3a), grün (Fig. 3b) und blau (Fig. 3c).

### Fig.1

Der mehrfarbige dichroitische Polarisator besteht aus einem Natrium-Silikatglassubstrat 1, das in einer Oberflächenschicht 2, die als Doppelschicht ausgebildet ist, submikroskopische Silberpartikel 3 enthält. Die Silberpartikel bilden Rotationsellipsoide, die durch ihr Halbachsenverhältnis beschrieben sind. Die mittleren Abmessungen der Rotationsellipsoide liegen im Bereich von einigen 10 nm. Die Silberpartikel sind durch den. Herstellungsprozess mit ihren Hauptachsen parallel zueinander und parallel zur Substratoberfläche ausgerichtet.

In jeweils hintereinander liegenden Teilschichten 4a und 4b, 5a und 5b, 6a und 6b sind die Achsverhältnisse der Silberpartikel derart eingestellt, dass sie Absorptionsbanden im blauen und grünen, blauen und roten bzw. grünen und roten Spektralbereich aufweisen. Dadurch erscheinen bei Durchstrahlung des Substrats 1 mit linear polarisiertem, weißen Licht mit Polarisationsrichtung parallel zur großen Halbachse der Partikel nebeneinander liegende Streifen 4, 5 und 6 des Substrats 1 in den Farben Rot, Grün bzw. Blau. Die Dicke der an die Oberfläche grenzenden Teilschichten 4a, 5a und 6a ist gleich und nach Maßgabe der Dicke der Oberflächenschicht 2, der Dichte- und Größenverteilung der Partikel innerhalb der Oberflächenschicht 2 festgelegt.

### Fig. 2

Nichtsphärische Silberpartikel führen zu einer dichroitischen Absorptionswirkung, wobei die spektrale Maximumslage der Absorptionsbande vom Halbachsenverhältnis der Silberpartikel abhängig ist. Für ein Halbachsenverhältnis der Silberpartikel von a/b = 3 ergibt sich eine Maximumslage der zugeordneten Absorptionsbande im roten Spektralbereich bei 630 nm. Bei kleineren Achsverhältnissen liegen die Maxima der entsprechenden Absorptionsbanden bei kleineren Wellenlängen. Bei einem Achsverhältnis nahe eins liegt die Absorptionsbande im blauen Spektralbereich bei 420 nm.

### Fig. 3a - c

Das Absorptionsspektrum der Oberflächenschicht 2 ergibt sich in den einzelnen nebeneinander liegenden Streifen 4, 5 und 6 jeweils aus der Überlagerung der zwei Absorptionsbanden der Teilschichten 4a; b , 5a; b und 6a; b.

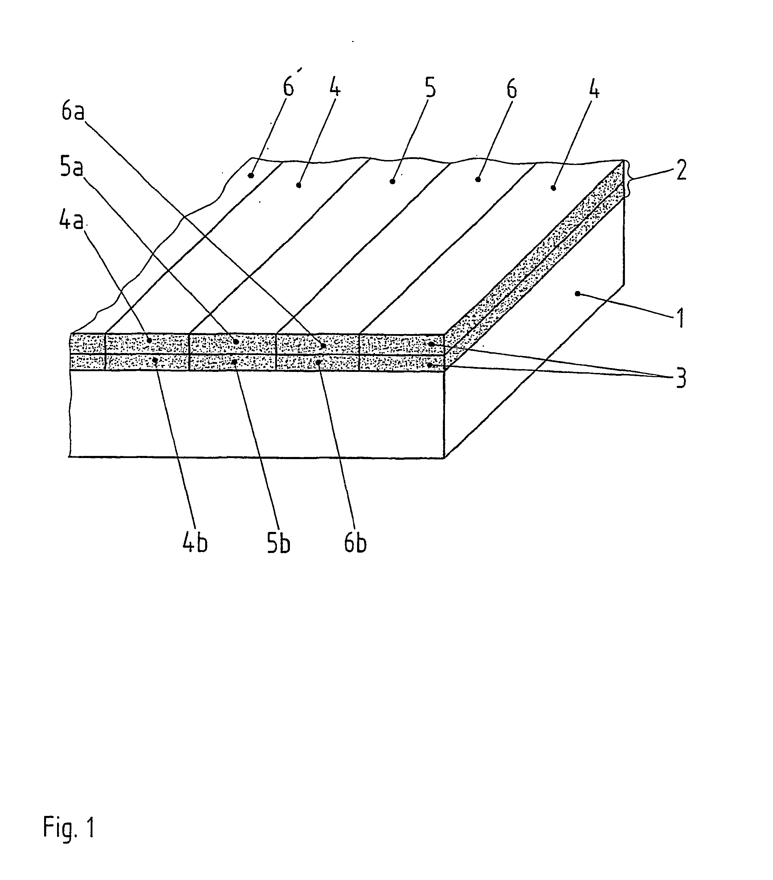

Im Folgenden wird das erfindungsgemäße Verfahren zur Herstellung des mehrfarbigen dichroitischen Polarisators mit farbigen, streifenförmigen Bildelementen beschrieben.
Zur Herstellung des mehrfarbigen dichroitischen Polarisators mit streifenförmigen lateralen Oberflächenbereichen in den Farben rot, grün und blau gemäß Fig. 1 wird von einem Glassubstrat ausgegangen, das im gesamten Bereich der späteren Doppelschicht mit Silberpartikeln versehen ist, deren mittleres Halbachsenverhältnis für eine Absorptionsbande im roten Spektralbereich sorgt. Anschließend wird das Substrat 1 in einem ersten Prozessschritt in den lateralen Bereichen 4, die nach Fertigstellung des Polarisators rot erscheinen sollen, über die gesamte Dicke der Oberflächenschicht 2 - der späteren Doppelschicht - durch quasi adiabatische Energieübertragung mit einem Elektronenstrahl soweit erwärmt, dass die Silberpartikel in diesen lateralen Bereichen über die gesamte Dicke der späteren Doppelschicht soweit relaxieren, dass sich die Absorptionsbande vom roten Spektralbereich in den grünen Spektralbereich verschiebt.

In einem zweiten Prozessschritt werden bei einer zum ersten Prozessschritt verringerten Beschleunigungsspannung des Elektronenstrahls nur die oberen Bereiche, die nach Fertigstellung des Polarisators die oberen Teilschichten 4a, 5a und 6a der Doppelschicht bilden, ebenfalls durch quasi adiabatische Energieübertragung mit dem Elektronenstrahl soweit erwärmt, dass sich die Absorptionsbande in der Teilschicht 4a von Grün nach Blau, in der Teilschicht 5a von Rot nach Blau und in der Teilschicht 6a von Rot nach Grün verschiebt. Die auf die einzelnen Streifen 4, 5 und 6 übertragenen Energiedichten werden dabei entsprechend den für die jeweils benötigte Spektralverschiebung der Absorptionsbanden erforderlichen Temperaturverhältnissen gewählt.

Für eine typische Dicke der Doppelschicht von 10 bis 20 µm wird im ersten Prozessschritt mit einer Beschleunigungsspannung für den Elektronenstrahl von 50 bis 70 kV, für den zweiten Prozessschritt mit einer Beschleunigungsspannung von <25 bis 35 kV gearbeitet. Die Anforderungen an eine adiabatische Energieübertragung sind hinreichend erfüllt, wenn diese je nach Beschleunigungsspannung des Elektronenstrahls für einen gegebenen Oberflächenort innerhalb von einigen bis zu einigen 10 Mikrosekunden erfolgt.

Zur Elimination unvermeidbarer geringfügiger Ungleichmäßigkeiten u. a. in den Eigenschaften des Glases, der Dicke der Oberflächenschicht sowie der darin vorliegenden Partikelverteilung kann sich eine Prozessregelung erforderlich machen. Dabei wird die Beschleunigungsspannung des Elektronenstrahls als Stellglied zur Ausregelung von Abweichungen in der optischen Dichte, die übertragene Energiedichte als Stellglied zur Ausregelung von Abweichungen in der spektralen Lage der Absorptionsbanden genutzt.

## Patentansprüche

1. Farbiger dichroitischer Polarisator, bestehend aus einem Glassubstrat (1), in das in einer Oberflächenschicht (2) nichtsphärische Metallpartikel (3) in gerichteter Anordnung eingelagert sind, **dadurch gekennzeichnet, daß** in mindestens einem Lateralbereich des Glassubstrats (1) die Oberflächenschicht (2) aus einer Doppelschicht besteht, deren beide Teilschichten (4a, 4b, 5a, 5b, 6a, 6b) Metallpartikel (3) mit jeweils unterschiedlichen mittleren Achsverhältnissen enthalten, wobei in jeweils untereinander liegenden Teilschichten (4a, 4b, 5a, 5b, 6a, 6b) die Achsverhältnisse der Metallpartikel derart eingestellt sind, daß die Doppelschicht in einem Lateralbereich (4) Teilschichten (4a, 4b) besitzt, die Absorptionsbanden mit Maxima im blauen und grünen aufweisen, daß die Doppelschicht in einem weiteren Lateralbereich (5) Teilschichten (5a, 5b) besitzt, die Absorptionsbanden mit Maxima im blauen und roten aufweisen, und daß die Doppelschicht in einem dritten Lateralbereich (6) Teilschichten (6a, 6b) besitzt, die Absorptionsbanden mit Maxima im grünen und roten Spektralbereich aufweisen.

2. Farbiger dichroitischer Polarisator nach Anspruch 1, **dadurch gekennzeichnet, dass** mehrere Lateralbereiche mit gleichem Absorptionsspektrum eine regelmäßige Anordnung von Streifen oder Pixeln bilden und dass sich neben jedem Streifen oder Pixel der regelmäßigen Anordnung zwei weitere Streifen oder Pixel befinden, die jeweils ein anderes Absorptionsspektrum aufweisen.

3. Farbige dichriotische Polarisatoren nach Anspruch 1, **dadurch gekennzeichnet, dass** jeweils drei Streifen oder Pixel zu einem Bildelement zusammengefasst werden und diese Bildelemente eine regelmäßige Anordnung bilden.

4. Farbige dichroitische Polarisatoren nach Anspruch 1 bis 3, **dadurch gekennzeichnet, dass** die Oberflächenschicht (2) eine Dicke von 10 bis 20 µm besitzt und dass alle oberflächennahen Teilschichten eine gleiche Dicke im Bereich von 5 bis 10 µm besitzen.

5. Verfahren zur Herstellung farbiger dichroitischer Polarisatoren nach Anspruch 1, bestehend aus einem Glassubstrat (1), das in einer Oberflächenschicht (2) nichtsphärische und in einzelne Lateralbereichen zumindest nicht vollständig relaxierte Metallpartikel (3) in gerichteter Anordnung enthält, wobei im gesamten Bereich der Oberflächenschicht (2) - der späteren Doppelschicht - die nicht vollständig relaxierten Metallpartikel (3) ein mittleres Halbachsenverhältnis aufweisen, welches eine Absorptionsbande mit Maximum im roten Spektralbereich ergibt, **dadurch gekennzeichnet, daß** in einem ersten Verfahrensschritt in einem ersten Lateralbereich (4), der nach Fertigstellung des Polarisators rot erscheinen soll, die gesamte Schicht (der späteren Doppelschicht) durch Energieeintrag mit einem Elektronenstrahl erwärmt wird, so daß die Metallpartikel so weit relaxieren, daß sich das Maximum der Absorptionsbande vom roten in den grünen Spektralbereich verschiebt, und daß in einem zweiten Verfahrensschritt bei einer zum ersten Verfahrensschritt verringerten Beschleunigungsspannung des Elektronenstrahls nur die oberen Bereiche der Oberflächenschicht (2), die nach Fertigstellung des Polarisators die oberen Teilschichten (4a, 5a, 6a) der Doppelschicht bilden, so weit erwärmt werden, daß sich das Maximum der Absorptionsbande der oberen Teilschicht (4a) des ersten Lateralbereichs (4) von grün nach blau, das Maximum der oberen Teilschicht (5a) eines weiteren Lateralbereichs (5) von rot nach blau und das Maximum der oberen Teilschicht (6a) eines dritten Lateralbereichs (6) von rot nach grün verschiebt.

## Claims

1. Dicroic colour polarizer consisting of a glass substrate (1) in which non-spherical metal particles (3) are embedded in a surface layer (2) in directional arrangement, **characterized in that** the surface layer (2) in at least one lateral area of the glass substrate (1) comprises a double layer of which the two part layers (4a, 4b, 5a, 5b, 6a, 6b) contain metal particles (3) that differ in their mean axial ratios between the two layers in such a way that the axial ratios of metal particles in neighbouring part layers (4a, 4b, 5a, 5b, 6a, 6b) - seen in vertical direction - are preset so as to make sure that the double layer in one of the lateral areas (4) has two part layers (4a, 4b) the absorption bands of which have peaks in the blue and the green region of the spectrum, and that the double layer in a second lateral area (5) has two part layers (5a, 5b) the absorption bands of which have peaks in the blue and the red region of the spectrum, and that the double layer in a third lateral area (6) has two part layers (6a, 6b) the absorption bands of which have peaks in the green and the red region of the spectrum.

2. Dicroic colour polarizer according to Claim 1, **characterized in that** several lateral areas with similar absorption spectrums form regular pattern of stripes and pixels each of which have two other neighbouring stripes or pixels the absorption spectrums of which are different.

3. Dicroic colour polarizers according to Claim 1, **characterized in that** the stripes or pixels are combined in groups of three each of them to form an individual image element, with all these image elements being arranged in a regular pattern.

4. Dicroic colour polarizers according to Claims 1 to 3, **characterized in that** the surface layer (2) has a thickness of 10 µm to 20 µm, and all surface-near part layers have the same thickness ranging from 5 µm to 10 µm.

5. Method for the manufacture of dicroic colour polarizers according to Claim 1, consisting of a glass substrate (1) in which non-spherical metal particles (3), that are at least not completely relaxed in some lateral areas, are embedded in a surface layer (2) in directional arrangement, where throughout the entire surface layer area (2), i.e. the future double layer, the said metal particles (3) have mean semi-axis ratios that bring about absorption bands with peaks in the red region of the spectrum, **characterized in that** in an initial process step a first lateral area (4), which shall appear red after the polarizer's manufacture is finished, the entire layer, i.e. the future double layer, is electron-beam heated so that the metal particles are relaxing to such an extent as to shift the absorption bands peaks from the red to the green region of the spectrum, and in a second process step the heating, with the beam potential being lower in comparison with that used in the initial process step, causes only the upper areas of the surface layer (2), which are to form the upper part layers (4a, 5a, 6a) of the double layer after the polarizer's manufacture is finished, to be heated to such an extent as to shift the absorption bands peaks in the upper part layer (4a) of the first lateral area (4) from the green to the blue region of the spectrum, and the absorption bands peaks in the upper part layer (5a) of a second lateral area (5) from the red to the blue region of the spectrum, and finally the absorption bands peaks in the upper part layer (6a) of a third lateral area (6) from the red to the green region of the spectrum.

## Revendications

1. Polariseur couleur dichroïque constitué d'un substrat de verre (1) dans lequel sont disposées, dans une couche superficielle (2), des particules métalliques non sphériques (3) en ordre dirigé, **caractérisé par le fait que** dans au moins un des domaines latéraux du substrat de verre (1) la couche superficielle (2) est constituée d'une double couche dont les deux couches partielles (4a, 4b, 5a, 5b, 6a, 6b) contiennent des particules métalliques (3) ayant chacune des rapports axiaux médians différents, vu que dans les couches partielles situées chacune l'une en dessous de l'autre (4a, 4b, 5a, 5b, 6a, 6b) les rapports axiaux des particules métalliques sont dirigés de telle sorte que la double couche dans un domaine latéral (4) possède des couches partielles (4a, 4b) présentant des bandes d'absorption avec des maxima dans le bleu et le vert, que la double couche dans un autre domaine latéral (5) possède des couches partielles (5a, 5b) présentant des bandes d'absorption avec des maxima dans le bleu et le rouge et que la double couche dans un troisième domaine latéral (6) possède des couches partielles (6a, 6b) présentant des bandes d'absorption avec des maxima dans le domaine spectral vert et rouge.

2. Polariseur couleur dichroïque selon la revendication 1 **caractérisé par le fait que** plusieurs domaines latéraux avec le même spectre d'absorption forment une disposition régulière de bandes ou de pixels et que côtoyant chaque bande ou pixel de la disposition régulière on trouve deux autres bandes ou pixels qui présentent chacun un autre spectre d'absorption.

3. Polariseurs couleur dichroïques selon la revendication 1 **caractérisés par le fait que** chaque fois trois bandes ou pixels sont groupés en un élément d'image et que ces éléments d'image forment une disposition régulière.

4. Polariseurs couleur dichroïques selon les revendications de 1 à 3 **caractérisés par le fait que** la couche superficielle (2) possède une épaisseur de 10 à 20 µm et que toutes les couches partielles proches de la surface ont une épaisseur égale variant entre 5 et 10 µm.

5. Procédé de fabrication des polariseurs couleur dichroïques selon la revendication 1 constitués d'un substrat de verre (1), contenant dans une couche superficielle (2) en disposition dirigée des particules métalliques (3) non sphériques et au moins non complètement relaxées dans certains domaines latéraux, les particules métalliques (3) qui ne sont pas complètement relaxées présentant dans le domaine complet de la couche de surface (2) - de la future double couche - un rapport médian semi-axial, lequel donne une bande d'absorption avec maximum dans le domaine spectral rouge, **caractérisé par le fait que** dans une première phase du procédé dans un premier domaine latéral (4) qui doit apparaître rouge une fois le polariseur terminé, la couche totale (la future double couche) sera réchauffée par l'apport d'énergie avec un rayon électronique, de sorte que les particules mécaniques se relaxent de telle manière que le maximum de la bande d'absorption se déplace du rouge vers le domaine spectral vert, et que dans une deuxième phase du procédé par une tension réduite d'accélération du rayon électronique par rapport à la première phase du procédé seulement les domaines supérieurs de la couche superficielle (2), qui formeront les couches partielles supérieures (4a, 5a,6a) de la double couche une fois le polarisateur terminé, seront réchauffés de sorte que le maximum de la bande d'absorption de la couche partielle supérieure (4a) se déplace dans le premier domaine latéral (4) du vert vers le bleu, que le maximum de la couche partielle supérieure (5a) d'un autre domaine latéral (5) se déplace du rouge vers le bleu et que le maximum de la couche partielle supérieure (6a) d'un troisième domaine latéral (6) se déplace du rouge vers le vert.
